# FASCICULE DE BREVET EUROPEEN

(11) **EP 1 776 298 B1**
(45) Date de publication et mention de la délivrance du brevet: **08.08.2012**
(21) Numéro de dépôt: 05777280.8
(22) Date de dépôt: 09.06.2005
(51) Int. Cl.: B65G 23/36, B65G 15/08, B65G 15/40

(54) **BANDE DE CONVOYAGE ET CONVOYEUR COMPORTANT UNE TELLE BANDE**
FÖRDERBAND UND FÖRDERVORRICHTUNG MIT BESAGTEM BAND
CONVEYOR BELT AND CONVEYOR COMPRISING SAID BELT

(30) Priorité: 09.06.2004 FR 0406249
(43) Date de publication de la demande: 25.04.2007
(73) Titulaire: Brunone, René, 27950 Saint Marcel (FR)
(72) Inventeur: Brunone, René, 27950 Saint Marcel (FR)
(74) Mandataire: Blot, Philippe Robert Emile
(86) Numéro de dépôt international: PCT/FR2005/001434
(87) Numéro de publication internationale: WO 2005/123552

(56) Documents cités:
- EP-A- 0 058 040
- WO-A-01/85579
- AU-B2- 640 617
- FR-A- 1 242 572
- FR-A- 2 497 502
- FR-A1- 2 263 955
- GB-A- 571 210
- US-A- 3 595 378
- US-A- 5 836 440

## Description

La présente invention concerne une bande pour un convoyeur à bande et un convoyeur comportant une telle bande.

Il est connu, dans les carrières ou sur les lieux d'extraction de minerais, d'utiliser des convoyeurs à bande pour déplacer les roches extraites. Ce déplacement peut s'effectuer sur des distances relativement longues pouvant atteindre plusieurs dizaines de kilomètres.

Les convoyeurs utilisés mettent en oeuvre des bandes portées couramment par des rouleaux de guidage répartis suivant le trajet de la bande.

Lorsque les matières transportées sont pulvérulentes, il convient que les convoyeurs soient recouverts de capots, évitant la dispersion des matières pulvérulentes.

Les rouleaux mis en oeuvre pour le support de la bande transporteuse sont difficiles à mettre en place et à ajuster.

Pour résoudre ce problème, il a été envisagé de concevoir des bandes transporteuses flottantes susceptibles de se déplacer à la surface de l'eau, soit à la surface d'une rivière préexistante, soit à la surface d'un canal créé spécifiquement pour le support de la bande.

La bande transporteuse présente généralement en section une forme d'auge et, lorsque la matière est pulvérulente, celle-ci a tendance à s'échapper, nécessitant la présence d'un capot. Un tel capot est aussi souhaitable pour éviter l'accumulation d'eau sur la bande en cas de pluie, ce qui pourrait conduire à ce que la bande flottante coule. Or, la mise en place d'un capot au-dessus d'une surface liquide est délicate.

Le document FR 2 263 955 décrit une bande selon le préambule de la revendication 1.

L'invention a pour but de proposer une solution économiquement intéressante au transport de matériaux, notamment de matières pulvérulentes, sur de longues distances.

A cet effet, l'invention à pour objet une bande selon la revendication 1.

Suivant des modes particuliers de réalisation, la bande comporte l'une ou plusieurs des caractéristiques suivantes :
- au repos, la bande délimite un espace clos non aplati et chaque section de la bande forme un contour fermé ;
- le tube délimité par la bande est fendu longitudinalement suivant toute la longueur de la bande, laquelle bande présente deux rives longitudinales accolées sur l'essentiel de la longueur de la bande ;
- elle présente, suivant sa longueur, un lest s'étendant généralement suivant une génératrice du tube délimité par la bande ; et
- le périmètre intérieur du tube délimité par la bande est compris entre 0,5 m et 3 m. L'invention a également pour objet un convoyeur à bande comportant :
- une bande transporteuse telle que décrite ci-dessus ;
- des moyens de support de la bande ; et
- des moyens d'entraînement de la bande pour son déplacement sur elle-méme.

Avantageusement, le convoyeur comporte l'une ou plusieurs des caractéristiques des revendications dépendantes.

L'invention sera mieux comprise à la lecture de la description qui va suivre, donnée uniquement à titre d'exemple et faite en se référant aux dessins, sur lesquels :
- les figures 1A et 1 B sont des vues respectivement de dessus et de côté d'un convoyeur selon l'invention ;
- les figures 2A et 2B sont des vues, respectivement, en section et en perspective d'un tronçon de la bande selon l'invention ;
- la figure 3 est une vue en section transversale du convoyeur pris suivant la ligne III-III ;
- la figure 4 est une vue en section du convoyeur prise suivant la ligne IV-IV ;
- la figure 5 est une vue de l'extrémité aval du convoyeur correspondant au lieu de déchargement ;
- la figure 6 est une vue en section du convoyeur pris dans une station d'entraînement ;
- la figure 7 est une vue de dessus du convoyeur dans une station d'entraînement ;
- les figures 8A et 8B sont des vues, respectivement, de dessus et en section du convoyeur dans une station de chargement ; et
- la figure 9 est une vue en section d'une variante de réalisation d'un tel convoyeur dans lequel la bande est supportée à la surface d'une étendue d'eau libre telle qu'un étang.

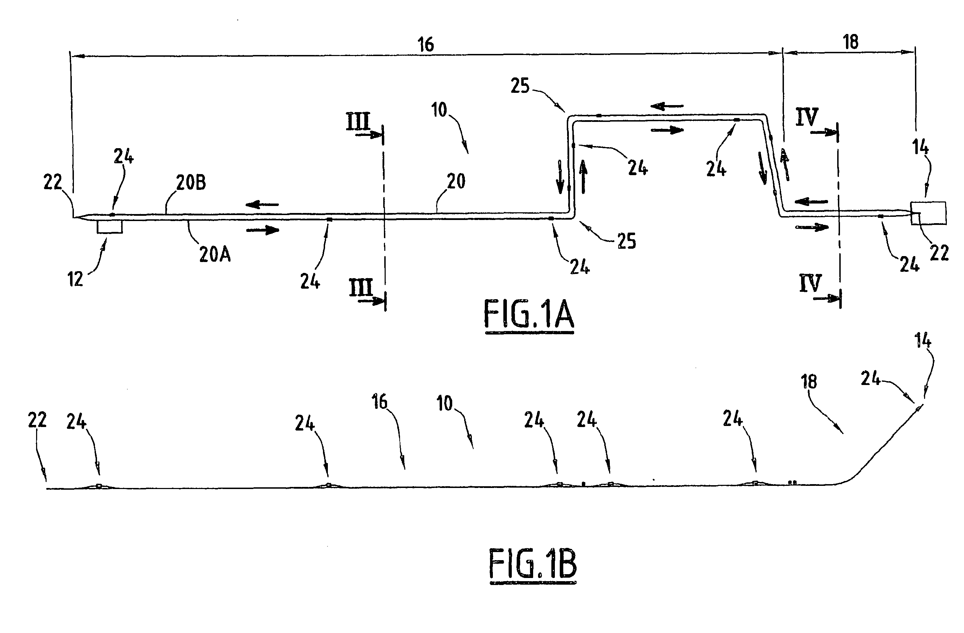

Sur les figures 1A et 1B est représenté un convoyeur 10 selon l'invention. Ce convoyeur est destiné à transporter des matériaux, et notamment des matériaux en vrac pulvérulents tels que du gypse sur une grande distance, celle-ci pouvant atteindre plusieurs dizaines de kilomètres. Ce transport s'effectue entre au moins une station de chargement 12 et une station de déchargement 14. Le sens de déplacement est représenté par des flèches sur la figure 1A.

Dans l'exemple considéré, le convoyeur s'étend sur une étendue 16 essentiellement plane puis sur une pente 18 présentant un fort dénivelé, la station de déchargement étant au sommet de la pente 18.

Le convoyeur 10 comporte une bande sans fin flottante 20 refermée en boucle présentant un brin de transport 20A et un brin de retour 20B s'étendant généralement parallèlement l'un à l'autre suivant le trajet de déplacement du convoyeur. Cette bande est maintenue depuis ses extrémités entre deux rouleaux de retournement 22 dont l'un est prévu dans la station de déchargement 14 et l'autre en aval de la station de chargement 12.

Suivant son trajet, la bande repose et se déplace par rapport à des moyens de support adaptés qui seront décrits dans la suite.

Des stations d'entraînement désignées par la référence générale 24 sont réparties suivant la longueur de la bande. Dans le mode de réalisation illustré sur les figures 1A et 1 B, le trajet de la bande présente des coudes 25. Les stations d'entraînement sont disposées sur chacun des brins de la bande, généralement immédiatement en amont de tels coudes 25, en considérant le sens d'avancement du brin en cause. Ainsi, la bande est généralement tractée plutôt que poussée.

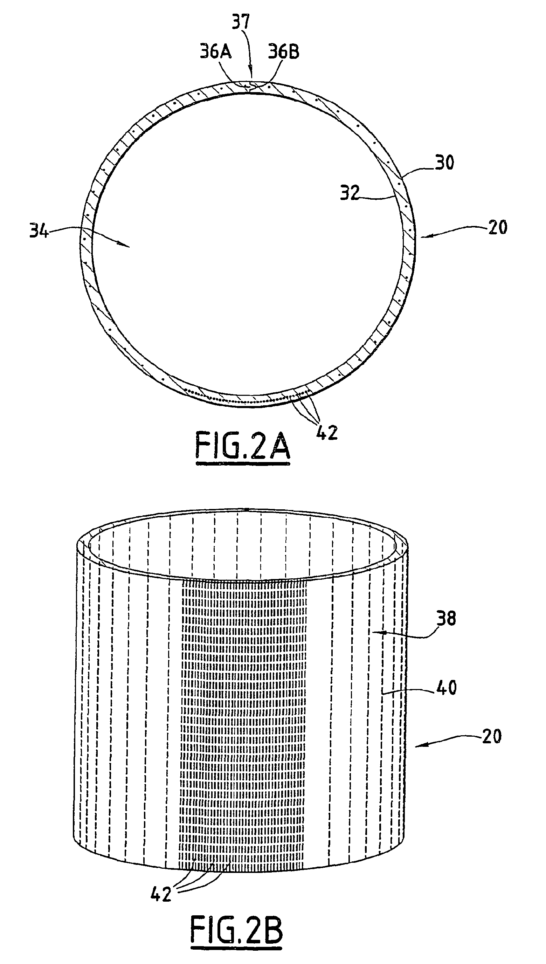

Selon l'invention, et comme illustré sur les figures 2A et 2B, la bande 20 présente généralement une forme de tube non aplati et délimite, sur l'essentiel de sa longueur en section, un contour fermé.

Plus précisément, la bande 20 présente une surface extérieure 30 et une surface intérieure 32 propre à délimiter une surface de support des produits à transporter.

La bande délimite en elle-même un espace clos tubulaire 34. Cet espace clos est généralement de section circulaire, la bande épousant une forme de cylindre de section circulaire. Le périmètre de la bande est avantageusement compris entre 0,5 m et 3 m. Par exemple, il est tel que le diamètre de l'espace clos 34 délimité par la bande soit sensiblement égal à 0,40 m et de préférence compris entre 0,2 m et 1 m.

La bande est fendue longitudinalement, les deux rives notées 36A, 36B de la bande étant accolées l'une à l'autre et définissant entre elles une fente longitudinale 37 normalement fermée. En particulier, la rive 36A présente une partie en saillie formant tenon alors que, dans son épaisseur, la rive 36B présente une partie en creux complémentaire formant mortaise et propre à recevoir la partie en saillie de la rive 36A. Cet accouplement à tenon et mortaise est adapté pour assurer une étanchéité satisfaisante de la bande.

Au repos, c'est-à-dire en l'absence de tension extérieure ou de charge dues aux matériaux contenus dans l'espace 34, la bande 20 est autoportante, de sorte qu'elle conserve une forme de tube non aplati et sensiblement circulaire.

La bande 20 est formée généralement en caoutchouc ou en PVC et est renforcée longitudinalement suivant toute sa longueur par une armature métallique ou synthétique 38 formée de fils de renfort longitudinaux 40 qui sont noyés dans le caoutchouc.

Un lest 42 est prévu dans la bande généralement suivant une génératrice du tube délimité par la bande, dans la région opposée à la fente 37 longitudinale. Ce lest est formé par une densité plus importante de fils de renforts.

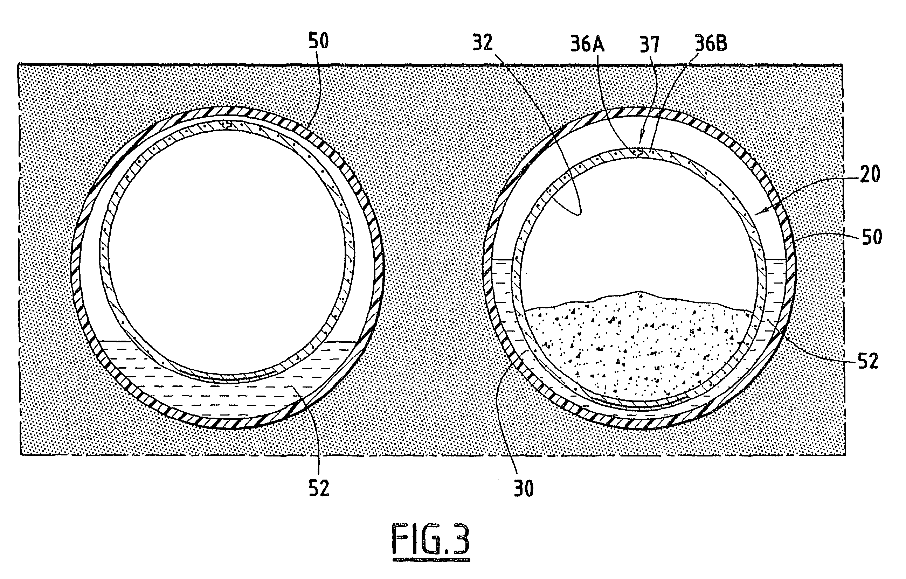

Comme illustré sur la figure 3, dans la région plane 16, en dehors du voisinage immédiat des rouleaux de retournement 22 et des stations d'entraînement 24, la bande 20, qu'il s'agisse du brin de transport 20A ou du brin de retour 20B est contenue dans une conduite 50 partiellement emplie d'eau 52 assurant le support de la bande.

Plus précisément, et comme illustré sur la figure 3, deux conduites adjacentes 50 sont formées dans le sol. Ces conduites, par exemple de section circulaire ont un diamètre supérieur au diamètre extérieur du tube délimité par la bande.

La quantité d'eau 52 contenue dans la conduite est telle que la bande, qu'elle soit ou non chargée, puisse flotter à la surface de l'étendue d'eau, sans heurter la partie supérieure ou la partie inférieure de la conduite.

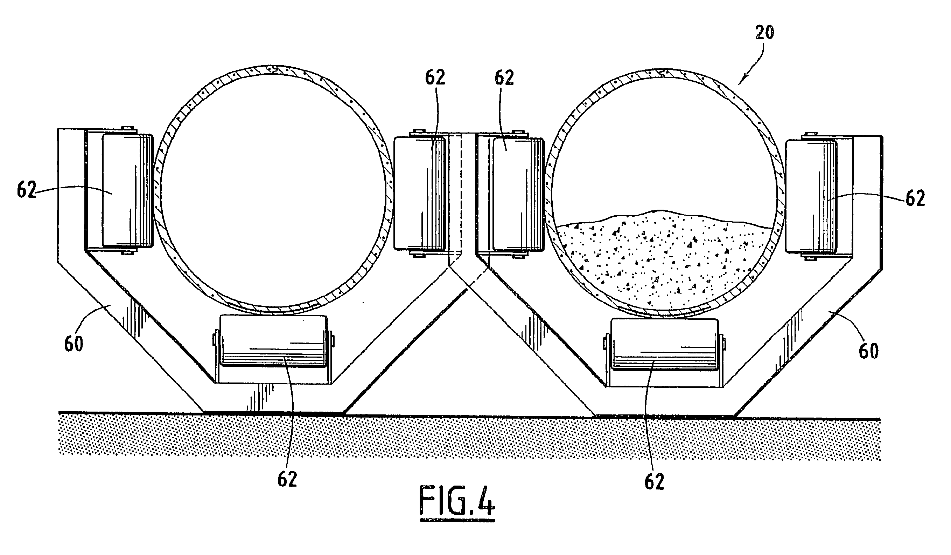

En revanche, dans les régions pentues, et notamment dans la région 18, le convoyeur comporte, comme illustré sur la figure 4, des châssis 60 de support de la bande équipés de rouleaux de guidage 62. Les rouleaux de guidage 62 comportent par exemple un rouleau inférieur d'axe horizontal et deux rouleaux latéraux d'axes verticaux entre lesquels est enserré un brin de la bande.

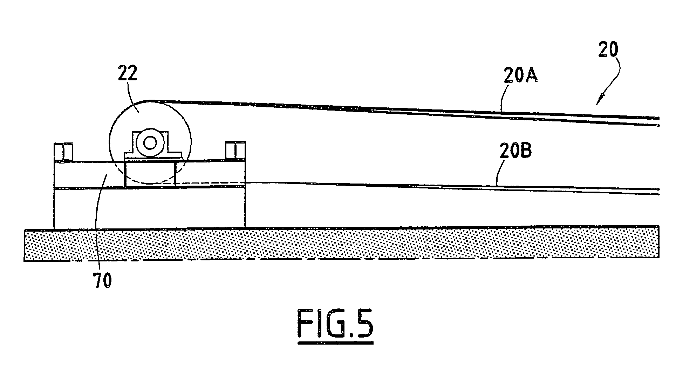

A ses extrémités, et comme illustré sur la figure 5, la bande s'applique sur un rouleau de retournement 22 supporté par un châssis de support 70 par rapport auquel le rouleau 22 est monté rotatif. Ce rouleau est non motorisé. En variante, ce rouleau est motorisé.

La bande 24 s'aplatit progressivement pour former un tube aplati lors de son passage autour du rouleau 22. A l'extrémité aval du brin 20A, le rouleau 22 assure également une éjection des produits hors de la bande, comme cela sera exposé ultérieurement.

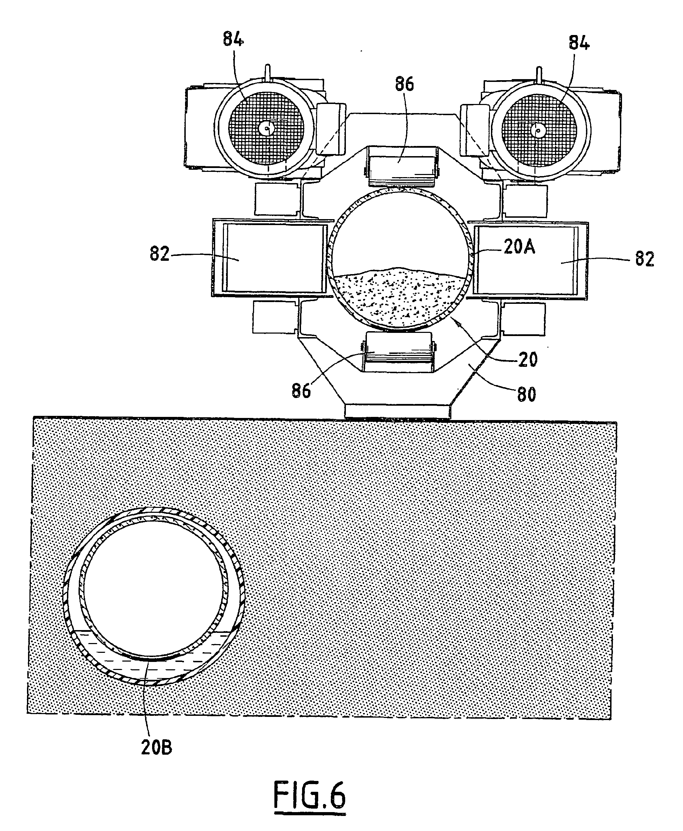

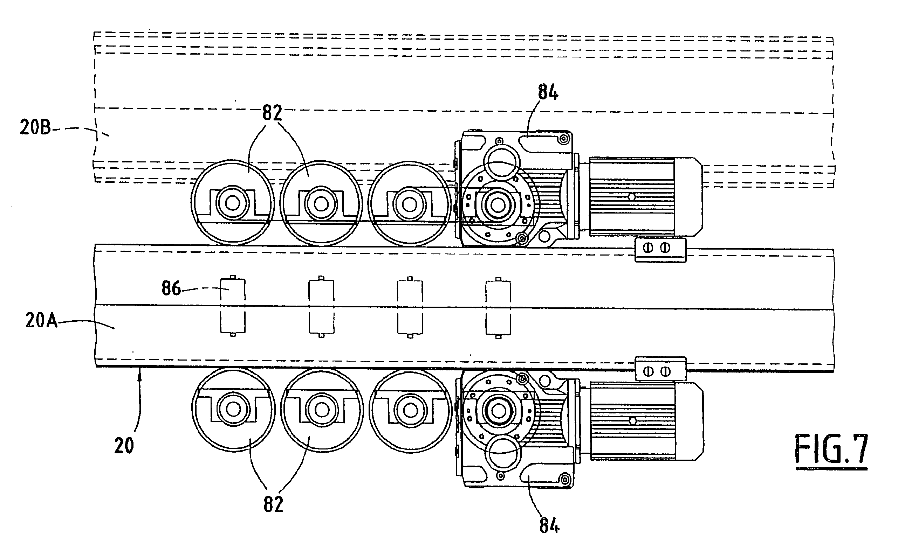

Une station d'entraînement 24 est représentée sur les figures 6 et 7. Dans une telle station, le brin, par exemple 20A, de la bande devant être entraînée est extrait de la conduite 50 et fait saillie à la surface du sol. Sur le sol, la station d'entraînement comporte un berceau 80 de support de la bande équipé de galets d'entraînement latéraux 82 entre lesquels le brin tracté de la bande est enserré. Plus précisément, quatre rouleaux d'entraînement successifs 82 sont disposés latéralement de chaque côté de la bande. La bande est enserrée entre deux paires de rouleaux correspondants. Les rouleaux disposés d'un même côté sont associés à un même groupe motoréducteur d'entraînement 84. En outre, la bande est maintenue, dans sa partie inférieure et dans sa partie supérieure, entre deux rouleaux fous 86.

Ainsi, la bande est totalement confinée entre les rouleaux d'entraînement 82 et les rouleaux de maintien 86.

De telles stations d'entraînement sont disposées par exemple tous les kilomètres.

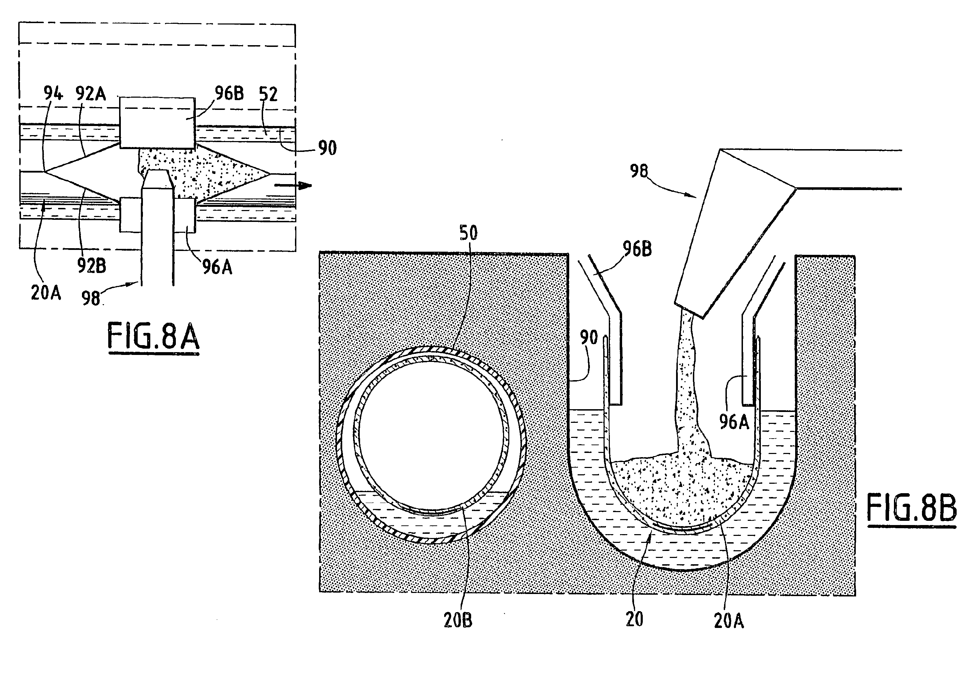

Sur les figures 8A et 8B est représentée une vue schématique de la station de chargement 12 disposée en amont sur le brin de transport 20A. Dans cette station, le conduit contenant le brin 20A est ouvert à l'air libre sur toute sa largeur et constitue ainsi un canal 90 contenant de l'eau 52. Ce canal est prolongé de part et d'autre par la conduite 50 et la bande 20 circule suivant la longueur de ce canal.

Deux surfaces de cames divergentes 92A, 92B sont prévues fixes dans ce canal et sont engagées au travers de la fente longitudinale 37 ménagée dans la bande. Ces deux surfaces de cames 92A, 92B se rejoignent à l'avant en une extrémité commune 94 formant pointe et divergent l'une de l'autre en considérant le sens d'avancement du brin de la bande. Ces surfaces de cames sont prolongées par des plaques de retenue 96A, 96B généralement parallèles sur les surfaces extérieures desquelles viennent s'appuyer les deux rives 36A, 36B écartées de la bande, comme illustré sur la figure 8B. Ces surfaces extérieures sont écartées d'une distance correspondant au diamètre du tube délimité par la bande 20.

Une goulotte 98 d'acheminement des matériaux jusqu'à la bande débouche entre les deux plaques 96A, 96B.

Ces plaques s'étendent sur une longueur de quelques mètres. En aval de ces plaques, la bande est laissée libre, de sorte que les deux rives 36A, 36B de la bande se rejoignent du fait de l'élasticité propre de la bande.

Une telle installation fonctionne de la manière suivante.

La bande est en permanence entraînée sous l'action des stations d'entraînement 24. Dans celles-ci, la bande 20 est enserrée entre les rouleaux moteurs 82 qui impriment à celle-ci un mouvement d'avancement longitudinal.

En dehors des stations d'entraînement 24, la bande repose à la surface de l'eau dans les conduites 50 ou sur les rouleaux 62 dans les tronçons en pente du convoyeur.

Dans les conduites 50, la bande est maintenue avec sa fente longitudinale en partie haute, grâce au lest 42 intégré à la bande et diamétralement opposé à la fente longitudinale d'accès à l'intérieur de la bande.

On conçoit que la bande définissant un espace tubulaire clos, les éventuelles poussières pouvant résulter du transport d'un matériau pulvérulent sont maintenues confinées à l'intérieur de l'espace 24 et ne détériorent ainsi pas l'environnement.

Pour le chargement, et comme illustré sur les figures 8A et 8B, la bande est progressivement ouverte grâce aux surfaces divergentes 92A, 92B au fur et à mesure de son avancement. Alors que les deux rives de la bande sont maintenues écartées par les plaques 96A, 96B, le matériau devant être transporté est déposé sur la surface intérieure 32 de la bande. Après quoi, la bande se referme sous l'action de son élasticité. Ainsi, un chargement en continu de la bande est possible.

De même, la bande est progressivement déchargée immédiatement en aval du rouleau de retournement 22 prévu à l'extrémité aval du brin de transport 20A. En effet, à cette extrémité, la bande se trouve aplatie et les deux rives 36A, 36B normalement jointives sont écartées, permettant l'évacuation du matériau contenu dans l'espace tubulaire 24 délimité par la bande.

On conçoit qu'avec un tel convoyeur, un transport efficace des matières peut être assuré, tout en évitant des agencements complexes pour éviter la perte de matériaux pulvérulents.

Du fait des longes distances pouvant être parcourues par un tel convoyeur, celui-ci peut être utilisé pour désengorger le transport routier.

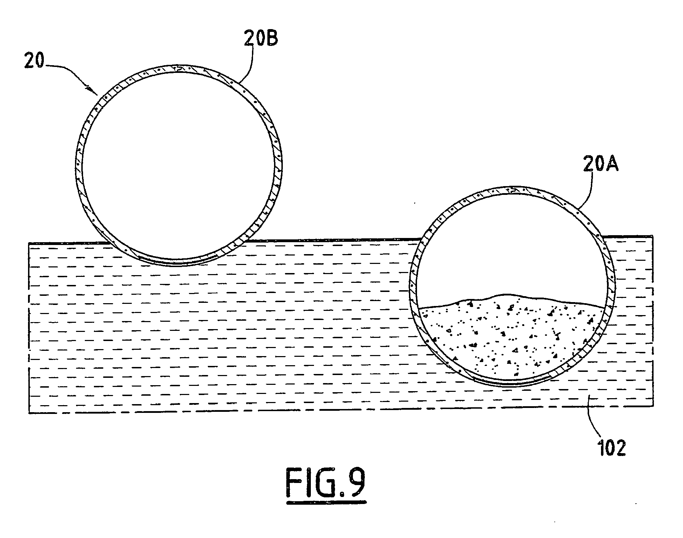

Sur la figure 9 est illustré schématiquement un autre mode de réalisation d'un tel convoyeur. Dans ce cas, dans les régions planes, la bande flotte à la surface d'une étendue d'eau confinée non pas dans une conduite souterraine 50 mais constituée par l'eau 100 d'une rivière ou d'un étang.

Dans ce cas, le brin de transport et le brin de retour 20 A et 20B de la bande flotte à la surface de la même étendue d'eau.

Le convoyeur décrit ici est supposé transporter des matériaux issus d'une carrière. Un tel convoyeur est, en variante, utilisé pour transporter des déchets et notamment des ordures ménagères. La bande en forme de tube circule alors dans une conduite du réseau d'égout. Des stations de chargement sont prévues à intervalles réguliers suivant tout le trajet de la bande pour permettre aux usagers de déverser leurs ordures sur la bande en vue de leur évacuation.

Dans ce cas par exemple, l'un des rouleaux de retournement est supprimé et la bande chemine au travers du réseau d'égout pour former une boucle, la bande suivant tout son trajet étant guidée par la conduite des égouts. Dans ce cas, seul un rouleau de retournement subsiste pour le déchargement du contenu de la bande.

## Revendications

1. Bande transporteuse (20) pour convoyeur à bande, laquelle bande forme une boucle et présente, sur une face, une surface (32) de réception des produits à transporter et, sur l'autre face, une surface (30) d'appui sur une structure de support (52, 60), la bande (20) présentant, sur l'essentiel de sa longueur, une forme de tube non aplati sensiblement circulaire, et délimitant un espace tubulaire clos de confinement des produits à transporter avec la surface de réception (32) des produits à l'intérieur du tube, dans laquelle la bande est autoportante, de sorte qu'elle conserve une forme de tube non aplati et se referme sous l'action de son élasticité, les deux rives (36A, 36B) de la bande étant alors accolées l'une à l'autre pour définir entre elles une fente longitudinale (37) normalement fermée, **caractérisée en ce qu'**elle présente, suivant sa longueur, un lest (42) s'étendant généralement suivant une génératrice du tube délimité par la bande, dans la région opposée à la fente longitudinale (37).

2. Bande selon la revendication 1, **caractérisée en ce que**, au repos, la bande (20) délimite un espace clos non aplati et chaque section de la bande forme un contour fermé.

3. Bande selon la revendication 1 ou 2, **caractérisée en ce que** le tube délimité par la bande est fendu longitudinalement suivant toute la longueur de la bande, laquelle bande présente deux rives (36A, 36B) longitudinales accolées sur l'essentiel de la longueur de la bande.

4. Bande selon l'une quelconque des revendications précédentes, **caractérisée en ce que** le périmètre intérieur du tube délimité par la bande est compris entre 0,5 m et 3 m.

5. Convoyeur à bande (10) comportant :
- une bande transporteuse (20) selon l'une quelconque des revendications précédentes,
- des moyens (52, 60) de support de la bande ; et
- des moyens (24) d'entraînement de la bande pour son déplacement sur elle-même.

6. Convoyeur selon la revendication 5, **caractérisé en ce que** les moyens d'entraînement comportent des rouleaux (82) d'entraînement associés à un groupe motoréducteur (84) d'entraînement des rouleaux, lesquels rouleaux d'entraînement (82) sont disposés de part et d'autre de la bande (20), laquelle bande est enserrée entre les rouleaux (82).

7. Convoyeur selon l'une quelconque des revendications 5 et 6, **caractérisé en ce que** les moyens de support comportent, sur au moins une partie du trajet de la bande (20), une étendue d'eau (52 ; 102) sur laquelle la bande (20) flotte.

8. Convoyeur selon la revendication 7, **caractérisé en ce que** les moyens de support comportent une conduite (50) partiellement emplie d'eau (52) pour former ladite étendue d'eau, la bande (20) circulant au travers de la conduite (50) sur au moins une partie de son trajet.

9. Convoyeur selon l'une quelconque des revendications 5 à 8, et ayant une bande selon la revendication 2, **caractérisé en ce qu'**il comporte au moins une station de chargement (12) équipée de surfaces de came divergentes (92A, 92B) engagées entre les rives (36A, 36B) de la bande et propres à provoquer leur écartement lors de l'avancement de la bande.

10. Convoyeur selon l'une quelconque des revendications 5 à 9, **caractérisé en ce que** le convoyeur présente au moins un coude (25) suivant son trajet, et **en ce que** des moyens (24) d'entraînement de la bande sont disposés immédiatement en amont du coude (25), en considérant le sens d'avancement de la bande.

11. Convoyeur selon l'une quelconque des revendications 6 à 10, **caractérisé en ce que** la bande présente un brin de transport (20A) et un brin de retour (20B) tous deux flottant à la surface d'une étendue d'eau (52 ; 102) formant les moyens de support.

## Claims

1. - Conveyor belt (20) for a belt conveyor, this belt forming a loop and having, on one face, a surface (32) for receiving products to be transported, and, on the other face, a surface (30) for bearing on a support structure (52, 60), the belt (20) taking the shape, along most of its length, of a substantially circular unflattened tube and forming a closed tubular space for confining the products to be transported, with the product receiving surface (32) inside the tube, in which the belt is self supporting, so that it remains in the shape of an unflattened tube and is closed by the effect of its own resilience, the two lips (36A, 36B) of the belt being adjacent to each other and forming between them a longitudinal slit (37) which is normally closed, **characterized in that** it has, along its length, a ballast (42) extending generally along a generatrix of the tube formed by the belt in an area generally apposite the longitudinal slit (37).

2. .- Belt according to Claim 1, **characterized in that**, at rest, the belt (20) forms an unflattened closed space, and each section of the belt forms a closed profile.

3. .- Belt according to Claim 1 or 2, **characterized in that** the tube formed by the belt is split longitudinally along the whole length of the belt, the belt having two longitundinal lips (36A, 36B) which are adjacent along most of the length of the belt.

4. .- Belt according to any one of the preceding claims, **characterized in that** the inner perimeter of the tube formed by the belt is in the range from 0.5 m to 3 m.

5. .- Belt conveyor (10) having:
- a conveyor belt (20) according to any one of the preceding claims,
- belt support means (52, 60); and
- means (24) of driving the belt for movement along its path.

6. .- Conveyor according to Claim 5, **characterized in that** the drive means have drive rollers (82) associated with a gear motor unit (84) for driving the rollers, these drive rollers (82) being positioned on either side of the belt (20) and this belt being gripped between the rollers (82).

7. .- Conveyor according to either one of Claims 5 and 6, **characterized in that** the support means include, over at least part of the path of the belt (20), a body of water (52; 102) on which the belt (20) floats.

8. .- Conveyor according to Claim 7, **characterized in that** the support means include a pipe (50) partially filled with water (52) to form said body of water, the belt (20) travelling through the pipe (50) on at least part of its path.

9. .- Conveyor according to any one of Claims 5 to 8. and having a belt according to Claim 2, **characterized in that** it has at least one loading station (12) provided with diverging cam surfaces (92A, 92B) engaged between the lips (36A, 36B) of the belt and capable of causing the separation of the lips when the belt advances.

10. .- Conveyor according to any one of Claims 5 to 9, **characterized in that** the conveyor has at least one bend (25) along its path, and **in that** means (24) for driving the belt are positioned immediately upstream of the bend (25), with respect to the direction of advance of the belt.

11. .- Conveyor according to any one of Claims 6 to 10, **characterized in that** the belt has a transport portion (20A) and a return portion (20B), both floating on the surface of a body of water (52; 102) forming the support means.

## Patentansprüche

1. Förderband (20) für einen Bandförderer, wobei das Band eine Schleife bildet und auf einer Seite eine Fläche (32) zur Aufnahme der zu befördernden Produkte sowie auf der anderen Seite eine Fläche (30) zur Anlage an einer Tragstruktur (52, 60) aufweist, wobei das Band (20) über den wesentlichen Teil seiner Länge die Form eines nicht abgeflachten, im Wesentlichen kreisförmigen Rohrs aufweist und mit der Fläche zur Aufnahme (32) der Produkte innerhalb des Rohrs einen geschlossenen rohrförmigen Raum zum Einschließen der zu befördernden Produkte begrenzt, wobei das Band selbsttragend ist, so dass es die Form eines nicht abgeflachten Rohrs beibehält und sich unter der Wirkung seiner Elastizität schließt, wobei die beiden Kanten (36A, 36B) des Bandes dann aneinandergefügt sind, um zwischen sich einen normalerweise geschlossenen Längsschlitz (37) zu definieren, **dadurch gekennzeichnet, dass** es entlang seiner Länge einen Ballast (42) aufweist, der sich im Allgemeinen entlang einer Mantellinie des durch das Band begrenzten Rohrs in dem dem Längsschlitz (37) gegenüberliegenden Bereich erstreckt.

2. Band nach Anspruch 1, **dadurch gekennzeichnet, dass** das Band (20) in Ruhe einen nicht abgeflachten, geschlossenen Raum begrenzt und jeder Querschnitt des Bandes eine geschlossene Kontur bildet.

3. Band nach Anspruch 1 oder 2, **dadurch gekennzeichnet, dass** das durch das Band begrenzte Rohr über die gesamte Länge des Bandes längsgeschlitzt ist, wobei das Band zwei Längskanten (36A, 36B) aufweist, die über den wesentlichen Teil der Länge des Bandes aneinander gefügt sind.

4. Band nach einem der vorhergehenden Ansprüche, **dadurch gekennzeichnet, dass** der Innenumfang des durch das Band begrenzten Rohrs im Bereich zwischen 0,5 m und 3 m liegt.

5. Bandförderer (10) umfassend:
- ein Förderband (20) nach einem der vorhergehenden Ansprüche,
- Mittel (52, 60) zum Tragen des Bandes und
- Mittel (24) zum Antreiben des Bandes für sein Umlaufen.

6. Förderer nach Anspruch 5, **dadurch gekennzeichnet, dass** die Antriebsmittel Antriebsrollen (82) umfassen, die einem Getriebemotoraggregat (84) zum Antreiben der Rollen zugeordnet sind, wobei die Antriebsrollen (82) auf beiden Seiten des Bandes (20) angeordnet sind, wobei das Band zwischen den Rollen (82) eingeschlossen ist.

7. Förderer nach einem der Ansprüche 5 und 5, **dadurch gekennzeichnet, dass** die Tragmittel über wenigstens einen Teil der Strecke des Bandes (20) eine Wasserfläche (52; 102) umfassen, auf der das Band (20) treibt.

8. Förderer nach Anspruch 7, **dadurch gekennzeichnet, dass** die Tragmittel eine teilweise mit Wasser (52) gefüllte Leitung (50) umfassen, um die Wasserfläche zu bilden, wobei das Band (20) über wenigstens einen Teil seiner Strecke durch die Leitung (50) läuft.

9. Förderer nach einem der Absprüche 5 bis 8, mit einem Band nach Anspruch 2, **dadurch gekennzeichnet, dass** er wenigstens eine Ladestation (12) umfasst, die mit auseinanderlaufenden Nockenflächen (92A, 92B) ausgestattet ist, welche zwischen die Kanten (36A, 36B) des Bandes eingesteckt und geeignet sind, bei der Vorwärtsbewegung des Bandes deren Spreizen zu bewirken.

10. Förderer nach einem der Ansprüche 5 bis 9, **dadurch gekennzeichnet, dass** der Förderer entlang seiner Strecke wenigstens eine Abwinklung (25) aufweist und dass Mittel (24) zum Antreiben des Bandes -unter Berücksichtigung der Vorwärtsbewegungsrichtung des Bandes- unmittelbar vor der Abwinklung (25) angeordnet sind.

11. Förderer nach einem der Ansprüche 6 bis 10, **dadurch gekennzeichnet, dass** das Band ein Fördertrum (20A) und ein Rücklauftrum (20B) aufweist, die beide auf der Oberfläche einer die Trägmittel bildenden Wasserfläche (52; 102) treiben.
